# EUROPEAN PATENT APPLICATION

(11) **EP 4 625 214 A1**
(43) Date of publication of application: **01.10.2025**
(21) Application number: 23910283.3
(22) Date of filing: 20.12.2023
(51) Int. Cl.: G06F 18/214

(54) **MODEL USAGE METHOD AND RELATED DEVICE**

(30) Priority: 27.12.2022 CN 202211681047
(71) Applicant: Huawei Technologies Co., Ltd., Shenzhen, Guangdong 518129 (CN)
(72) Inventor: CHEN, Jiaxuan, Shenzhen, Guangdong 518129 (CN); CHAI, Xiaomeng, Shenzhen, Guangdong 518129 (CN); PANG, Jiyong, Shenzhen, Guangdong 518129 (CN); JIN, Huangping, Shenzhen, Guangdong 518129 (CN); SUN, Yan, Shenzhen, Guangdong 518129 (CN)
(74) Representative: MERH-IP Matias Erny Reichl Hoffmann Patentanwälte PartG mbB
(86) International application number: PCT/CN2023/140041
(87) International publication number: WO 2024/140353

(57) **Abstract**

Embodiments of this application provide a model usage method and a related device, and relate to the communication field. In the method, a first communication device may determine a first association relationship based on a status of the first communication device, to customize a scenario classification granularity. Then, the first communication device may obtain first information from a second communication device to train at least one first AI model in M first AI models, or the first communication device may determine one first AI model for inference from M first AI models based on the first association relationship. The first association relationship is an association relationship between X pieces of scenario information, Y pieces of configuration information, and the M first AI models of the first communication device, X, Y, and M are positive integers, and M is less than or equal to X*Y.

## Description

This application claims priority to Chinese Patent Application No. 202211681047.X, filed with the China National Intellectual Property Administration on December 27, 2022 and entitled "MODEL USAGE METHOD AND RELATED DEVICE", which is incorporated herein by reference in its entirety.

### TECHNICAL FIELD

Embodiments of this application relate to the communication field, and in particular, to a model usage method and a related device.

### BACKGROUND

With development of wireless communication technologies, to support more services and meet higher requirements on indicators such as a system capacity and a communication delay, a scale of an antenna array is continuously growing, and supported frequency bands are also continuously added. As a result, a communication system becomes more complex. Therefore, improving performance of the complex communication system by using artificial intelligence (Artificial Intelligence, AI), such as deep learning (Deep Learning, DL), becomes an important research direction.

Because an AI model is obtained by performing training based on training data, performance of the AI model cannot be ensured for an input that has a different feature from the training data. To actually deploy a designed AI model in a wireless communication service process and make full use of an AI model function, an AI model that can process inputs in different communication scenarios needs to be designed to ensure that the communication system can operate normally in different scenarios.

In conventional technologies, a plurality of communication scenarios are predefined, so that a communication device can train a corresponding AI model for each communication scenario. In this way, the communication device can use different AI models in different communication scenarios, and a model scale corresponding to each scenario is small. However, additional model switching overheads are caused. Therefore, the AI model scale and the model switching overheads need to be comprehensively considered to determine a scenario classification granularity. However, because different devices have different computing capabilities, maximum AI model scales supported by the devices are different. If a fixed scenario classification is used, a device having a strong computing capability cannot use an AI model having a larger scale and a stronger generalization capability to reduce model switching overheads, and a device having a limited computing capability may not meet generalization requirements in some scenario classifications.

### SUMMARY

This application provides a model usage method and a related device, to customize a scenario classification granularity.

According to a first aspect, a model usage method is provided, applied to a first communication device.

Specifically, the model usage method includes the following steps:
The first communication device determines a first association relationship. The first communication device obtains first information from a second communication device to train at least one first artificial intelligence AI model in M first AI models, and/or the first communication device determines one first AI model for inference from the M first AI models based on the first association relationship.

The first association relationship is an association relationship between X pieces of scenario information, Y pieces of configuration information, and the M first AI models of the first communication device, X, Y, and M are positive integers, and M is less than or equal to X*Y.

In this solution, the first communication device may determine the first association relationship based on a status of the first communication device, to customize a scenario classification granularity. Then the first communication device may obtain the first information from the second communication device to train at least one first AI model in the M first AI models, or the first communication device may determine one first AI model for inference from the M first AI models based on the first association relationship.

The scenario information is scenario information that can be obtained by the first communication device or the second communication device. For example, the scenario information may indicate a scenario in which the first communication device is located. The scenario information may also indicate a scenario in which the second communication device is located. For example, the scenario indicated by the scenario information may be an outdoor scenario or an indoor scenario, or the scenario indicated by the scenario information is a scenario in which a device moves at a high speed, a scenario in which a device moves at a medium speed, or a scenario in which a device moves at a low speed. The scenario information may alternatively indicate a scenario of a communication link between the first communication device and the second communication device. For example, the scenario indicated by the scenario information may be a scenario in which communication channel coherence time (which is duration in which a communication channel remains unchanged) is less than a threshold or a scenario in which communication channel coherence time is greater than a threshold.

In addition, one type of scenario information and one type of configuration information form a combination, one first AI model may correspond to one or more combinations, and one combination corresponds to one first AI model.

With reference to a possible implementation of the first aspect, a combination manner of scenario information and configuration information that correspond to one first AI model in the M first AI models is related to the first communication device.

Therefore, in this application, the first communication device sets, based on the status of the first communication device, a combination manner of scenario information and configuration information that correspond to each first AI model.

With reference to a possible implementation of the first aspect, the model usage method further includes: The first communication device sends second information to the second communication device, where the second information indicates the first association relationship. Therefore, in this application, the second communication device may learn of the first association relationship based on the second information.

With reference to a possible implementation of the first aspect, that the first communication device determines the first association relationship includes:
The first communication device determines the first association relationship based on a second association relationship, where the second association relationship is an association relationship between the X pieces of scenario information, the Y pieces of configuration information, and N second AI models of the second communication device, N is a positive integer, and N is less than or equal to X*Y.

Therefore, in this application, the first communication device may determine the first association relationship based on the second association relationship, where the X pieces of scenario information and the Y pieces of configuration information may be obtained based on the second association relationship, and then the first communication device may set a correspondence between the M first AI models and the X pieces of scenario information and the Y pieces of configuration information based on the status of the first communication device.

With reference to a possible implementation of the first aspect, the first information indicates data collected by the second communication device in a scenario indicated by first scenario information and a configuration indicated by first configuration information, the first scenario information is at least one of the X pieces of scenario information, and the first configuration information is at least one of the Y pieces of configuration information.

Therefore, in this application, the first information may be data collected by the second communication device in a scenario indicated by scenario information corresponding to at least one first AI model and a configuration indicated by configuration information corresponding to the at least one first AI model.

With reference to a possible implementation of the first aspect, the model usage method further includes:
The first communication device sends first indication information to the second communication device, where the first indication information indicates the first scenario information and the first configuration information.

Therefore, in this application, the second communication device may obtain the first information based on the first indication information, and the first communication device may obtain the first information from the second communication device to perform model training.

With reference to a possible implementation of the first aspect, the first indication information indicates that one or more of the following are included: the first association relationship; first model indication information used to determine the first AI model; the first scenario information; or the first configuration information.

With reference to a possible implementation of the first aspect, the model usage method further includes: The first communication device performs inference by using a third AI model. The third AI model is determined based on second scenario information, or second scenario information and the second information. The third AI model is one of the M first AI models. For example, the first communication device or the second communication device may determine the third AI model.

The second scenario information is one of the X pieces of scenario information. The second information includes one or more of the following: model performance indicators of the M first AI models or second configuration information. The second configuration information is at least one piece of configuration information determined by the first communication device from the Y pieces of configuration information.

With reference to a possible implementation of the first aspect, the model usage method further includes: The first communication device receives second indication information sent by the second communication device, where the second indication information indicates the first communication device to perform inference by using the third AI model.

Therefore, in this application, the second communication device determines the third AI model, and then indicates, by using the second indication information, the first communication device to perform inference by using the third AI model.

With reference to a possible implementation of the first aspect, the second indication information indicates that one or more of the following are included: second model indication information used to determine the third AI model; third configuration information; or third scenario information. The third configuration information and the third scenario information are associated with the third AI model.

With reference to a possible implementation of the first aspect, the model usage method further includes: The first communication device indicates the second scenario information to the second communication device.

Therefore, in this application, the first communication device may determine the second scenario information, and then indicate the second scenario information to the second communication device, so that the second communication device can determine the third AI model based on the second scenario information.

With reference to a possible implementation of the first aspect, the model usage method further includes: The first communication device indicates the second configuration information to the second communication device.

Therefore, in this application, the first communication device may determine the second configuration information, and then indicate the second configuration information to the second communication device, so that the second communication device can determine the third AI model based on the second configuration information.

According to a second aspect, this application further provides a first communication device, including a determining module and a processing module.

The determining module is configured to determine a first association relationship. The first association relationship is an association relationship between X pieces of scenario information, Y pieces of configuration information, and M first artificial intelligence AI models of the first communication device, X, Y, and M are positive integers, and M is less than or equal to X*Y.

The processing module is configured to: obtain first information from a second communication device to train at least one first AI model in the M first AI models, and/or determine one first AI model for inference from the M first AI models based on the first association relationship.

According to a third aspect, this application further provides a communication device, including a processor, where the processor is coupled to a memory. The memory is configured to store a computer program or instructions, and the processor is configured to execute the computer program or the instructions, so that the communication device performs the method according to the first aspect.

According to a fourth aspect, this application further provides a computer-readable storage medium, including a computer program. When the computer program is run on a computer, the computer is enabled to perform the method according to the first aspect.

According to a fifth aspect, this application further provides a computer program product. When the computer program product runs on a computer, the computer is enabled to perform the method according to the first aspect.

According to a sixth aspect, this application further provides a chip. The chip includes a processor and a data interface, and the processor reads, through the data interface, instructions stored in a memory, to perform the method according to the first aspect.

Optionally, in an implementation, the chip may further include the memory. The memory stores the instructions. The processor is configured to execute the instructions stored in the memory. When the instructions are executed, the processor is configured to perform the method according to the first aspect.

### BRIEF DESCRIPTION OF DRAWINGS

The following introduces accompanying drawings used in embodiments of this application.
FIG. 1A is a diagram of a structure of a neural network according to an embodiment of this application;
FIG. 1B is a diagram of a system architecture according to an embodiment of this application;
FIG. 2 is a schematic flowchart of a model usage method according to an embodiment of this application;
FIG. 3 is a specific schematic flowchart of a model usage method according to an embodiment of this application;
FIG. 4 is a specific schematic flowchart of another model usage method according to an embodiment of this application;
FIG. 5 is a specific schematic flowchart of another model usage method according to an embodiment of this application;
FIG. 6 is a specific schematic flowchart of another model usage method according to an embodiment of this application;
FIG. 7 is a diagram of a structure of a first communication device according to an embodiment of this application; and
FIG. 8 is a diagram of a structure of a communication device according to an embodiment of this application.

### DESCRIPTION OF EMBODIMENTS

In embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relative concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit a performing sequence of the steps.

In addition, unless otherwise specified, ordinal numbers such as "first" and "second" in embodiments of this application are used to distinguish between a plurality of objects, but are not intended to limit an order, a time sequence, priorities, or importance degrees of the plurality of objects. For example, a first device and a second device are merely for ease of description, and do not indicate a difference of the first device and the second device in terms of a structure and an importance degree. In some embodiments, the first device and the second device may alternatively be a same device.

As used in the foregoing embodiments, based on the context, the term "when" may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and the principle of this application shall fall within the protection scope of this application.

The following describes technical solutions of this application with reference to accompanying drawings.

Embodiments of this application relate to an application. Therefore, for ease of understanding, the following first describes related concepts such as related terms in embodiments of this application.

### (1) Artificial intelligence

The artificial intelligence enables machines to learn and accumulate experience, so that the machines can resolve problems such as natural language understanding, image recognition, and chess playing that may be resolved by humans through experience.

### (2) Machine learning

The machine learning (Machine Learning) is an implementation of artificial intelligence. The machine learning is a method that can give learning capabilities to machines to enable machines to complete functions that cannot be implemented by direct programming. In practice, the machine learning is a method for training a model by using data, and then using the model for prediction.

### (3) Neural network

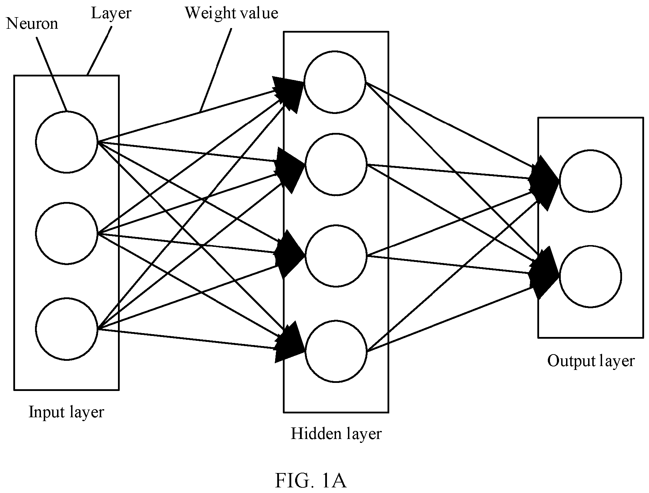

The neural network (Neural Network) is a specific representation of a machine learning method. The neural network is a mathematical model that imitates behavior features of an animal neural network to process information. FIG. 1A is a diagram of a structure of a neural network according to an embodiment of this application. The neural network is a network that may be organized by three types of computing layers: an input layer, a hidden layer, and an output layer. Each layer has one or more logical determining units. The logical determining units are referred to as neurons (Neurons). A neural network structure includes a feedforward neural network (Feedforward Neural Network, FNN), a convolutional neural network (Convolutional Neural Network, CNN), a recurrent neural network (Recurrent Neural Network, RNN), and the like. These network structures are all formed based on neurons. Each neuron performs a weighted summation operation on input values of the neuron, and applies a non-linear function to a weighted summation result to generate an output. In this case, a weight value of the weighted summation operation of the neuron in the neural network and the non-linear function are referred to as parameters of the neural network. A connection relationship between neurons in a neural network is referred to as a neural network structure, and parameters of all neurons in the neural network constitute parameters of the neural network.

With development of wireless communication technologies, to support more services and meet higher requirements on indicators such as a system capacity and a communication delay, a scale of an antenna array is continuously growing, and supported frequency bands are also continuously added. As a result, a communication system becomes more complex. Therefore, improving performance of the complex communication system by using artificial intelligence, such as deep learning (Deep Learning, DL), becomes an important research direction, for example, application of the AI in many wireless communication technologies such as channel state information (Channel State Information, CSI) feedback, beam management, and pilot design management.

Because an AI model is obtained by performing training based on training data, performance of the AI model cannot be ensured for an input that has a different feature from the training data. To actually deploy a designed AI model in a wireless communication service process and make full use of an AI model function, an AI model that can process inputs in different communication scenarios needs to be designed to ensure that the communication system can operate normally in different scenarios.

In conventional technologies, a plurality of communication scenarios are predefined, so that a communication device can train a corresponding AI model for each communication scenario. In this way, the communication device can use different AI models in different communication scenarios, and a model scale corresponding to each scenario is small. However, additional model switching overheads are caused. Therefore, the AI model scale and the model switching overheads need to be comprehensively considered to determine a scenario classification granularity. However, because different devices have different computing capabilities, maximum AI model scales supported by the devices are different. If a fixed scenario classification is used, a device having a strong computing capability cannot use an AI model having a larger scale and a stronger generalization capability to reduce model switching overheads, and a device having a limited computing capability may not meet generalization requirements in some scenario classifications.

Therefore, in view of the foregoing technical problem, this application provides a model usage method. A first communication device may customize an association relationship of the first communication device, that is, an association relationship between X pieces of scenario information, Y pieces of configuration information, and M first AI models of the first communication device, to customize a scenario classification granularity, and meet different requirements of different communication devices. In addition, the first communication device may obtain first information from a second communication device to train at least one first AI model in the M first AI models, or the first communication device may determine one first AI model for inference from the M first AI models based on the first association relationship.

The model usage method may be performed by the first communication device or a chip in the first communication device.

The first communication device and the second communication device may be devices in a communication system, for example, an access network device and a terminal device (terminal for short, or User Equipment, UE).

The terminal may include various handheld devices, vehicle-mounted devices, wearable devices, computing devices, or other processing devices connected to a wireless modem that have a wireless communication function, and various forms of terminals, such as a mobile station (Mobile Station, MS), a terminal (Terminal), a soft terminal, an access terminal, a terminal device unit (Subscriber Unit), a terminal device station, a mobile station (Mobile Station, MS), a remote station, a remote terminal, a mobile device, a terminal device agent, and a terminal device apparatus. For example, the terminal may be a water meter, an electricity meter, or a sensor.

The access network device may have any one of the following alternative terms: a radio access network (Radio Access Network, RAN) and an access network (Access Network, AN). The access network device may be a base station, a continuously evolved NodeB (gNB), an evolved NodeB (Evolved NodeB, eNB), a transmission reception point (Transmission Reception Point, TRP), a central unit (Central Unit, CU) node, a distributed unit (Distributed Unit, DU) node, a transmission point (Transmission Point, TP), a receiving point (Receiving Point, RP), or the like. This is not limited herein. In this application, an example in which the access network device is a base station is used for description, and a function performed by the base station is also applicable to other alternative terms of the access network device.

The communication system may include a future communication network such as a long term evolution (Long Term Evolution, LTE) system, a long term evolution-advanced (Long Term Evolution-Advanced, LTE-A) system, an enhanced long term evolution (Enhanced Long Term Evolution-Advanced, eLTE) system, a 5th generation (the 5th Generation, 5G) mobile communication system new radio (New Radio, NR) system, and a 6th generation (the 6th Generation, 6G) mobile communication system, and a system such as a cellular system related to wireless fidelity (Wireless-Fidelity, Wi-Fi), worldwide interoperability for microwave access (Worldwide Interoperability for Microwave Access, WIMAX), or the 3rd generation partnership project (3rd Generation Partnership Project, 3GPP).

For example, in the communication system, the first communication device sends configuration information to the second communication device, and sends data to the second communication device, or receives data sent by the second communication device; and the second communication device receives the configuration information sent by the first communication device, and sends the data to the first communication device based on the configuration information, or the second communication device receives the data sent by the first communication device.

For example, when the first communication device is a base station, and the second communication device is a terminal, the base station and the terminal form a communication system. In the communication system, the terminal may send uplink data to the base station, and the base station needs to receive the uplink data sent by the terminal. In addition, the base station may send the configuration information to the terminal. Moreover, different terminals may also form a communication system. In this case, both the first communication device and the second communication device are terminals. For example, in an internet of vehicles system, a terminal 1 sends configuration information to a terminal 2, and receives data sent by the terminal 2; and the terminal 2 receives the configuration information sent by the terminal 1, and sends the data to the terminal 1.

The following describes a system architecture provided in embodiments of this application.

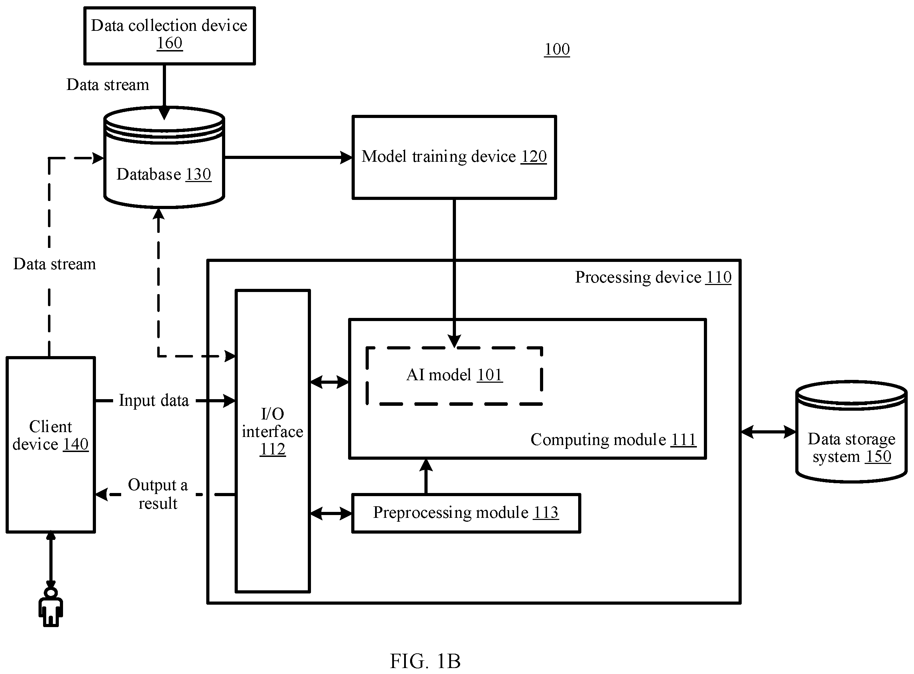

Refer to FIG. 1B. An embodiment of this application provides a system architecture 100. As shown in the system architecture 100, a data collection device 160 is configured to collect training data, and store the training data in a database 130. A model training device 120 retrains a pre-trained AI model based on the training data maintained in the database 130, to obtain an AI model 101. The model training device 120 may be a terminal, for example, a mobile phone terminal, a tablet computer, a notebook computer, an AR/VR, a vehicle-mounted terminal, a monitoring device, a vehicle-mounted autonomous driving system, or a self-service vending machine, or may be a server, a cloud, or the like. Alternatively, the model training device 120 may be a communication device such as an access network device. The AI model 101 may be configured to implement various artificial intelligence tasks. It should be noted that, during actual application, the training data maintained in the database 130 is not necessarily all collected by the data collection device 160, and may be received from another device, for example, a camera. In addition, it should be noted that, during actual application, the training data maintained in the database 130 is not necessarily all collected by the data collection device 160, and may be received from another device. It should further be noted that the model training device 120 may not necessarily retrain the AI model 101 completely based on the training data maintained in the database 130, or may obtain training data from a cloud or another place to retrain the model. The foregoing descriptions should not be construed as a limitation on this embodiment of this application.

The AI model 101 obtained through retraining by the model training device 120 may be used in different systems or devices, for example, used in a processing device 110 shown in FIG. 1B. The processing device 110 may be a terminal, for example, a mobile phone terminal, a tablet computer, a notebook computer, an AR/VR, a vehicle-mounted terminal, a monitoring device, a vehicle-mounted autonomous driving system, or a self-service vending machine, or may be a server, a cloud, or the like. Alternatively, the processing device 110 may be a communication device such as an access network device. In FIG. 1B, the processing device 110 is configured with an I/O interface 112, configured to exchange data with an external device. A user may input data to the I/O interface 112 by using a client device 140. The input data may include model indication information or the like in this embodiment of this application, and may be input by the user, or may be obtained from the database.

Optionally, a preprocessing module 113 is configured to perform preprocessing based on the input data (for example, a picture) received by the I/O interface 112. In this embodiment of this application, the preprocessing module 113 is configured to perform preprocessing based on the input data (for example, a picture) received by the I/O interface 112, and preprocessed data enters a computing module 111. In this embodiment of this application, the preprocessing module 113 may be configured to perform at least one of processing such as cropping and filtering on a to-be-processed picture, to obtain a to-be-processed picture that meets a requirement.

In a related processing process in which the processing device 110 preprocesses the input data or the computing module 111 of the processing device 110 performs computing, the processing device 110 may invoke data, code, and the like in a data storage system 150 to implement corresponding processing, or may store, into the data storage system 150, data, instructions, and the like obtained through the corresponding processing.

Optionally, the I/O interface 112 returns a model processing result of the AI model 101 to the client device 140, to provide the model processing result for the user. In this case, the client device 140 may be a display.

It should be noted that the model training device 120 may generate corresponding AI models 101 based on different training data for different targets or tasks. The corresponding AI models 101 may be used to implement the targets or complete the tasks, to provide a required result for the user.

In a case shown in FIG. 1B, the user may manually provide input data. The input data may be manually provided by using an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the processing device 110. The result may be presented in a specific manner of displaying, a sound, an action, or the like. The client device 140 may alternatively be used as a data collection end, to collect, as new sample data, input data input to the I/O interface 112 and an output result output from the I/O interface 112 that are shown in FIG. 1B, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in FIG. 1B.

It should be noted that FIG. 1B is merely a diagram of a system architecture according to this embodiment of this application, and a location relationship between a device, a component, and a module that are shown in the figure does not constitute any limitation. For example, in FIG. 1B, the data storage system 150 is an external memory relative to the processing device 110. In other cases, the data storage system 150 may alternatively be disposed in the processing device 110. In addition, the model training device 120 and the processing device 110 may be a same device.

The following specifically describes a model usage method provided in this application.

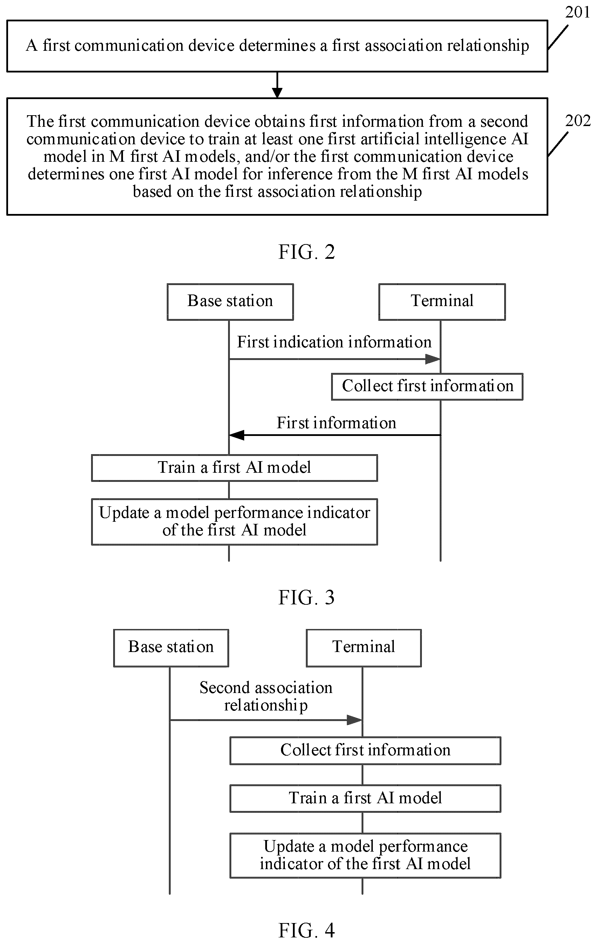

FIG. 2 is a schematic flowchart of a model usage method according to an embodiment of this application. The model usage method includes the following steps:
201: A first communication device determines a first association relationship.

The first association relationship is an association relationship between X pieces of scenario information, Y pieces of configuration information, and M first AI models of the first communication device, X, Y, and M are positive integers, and M is less than or equal to X*Y.

The scenario information is scenario information that can be obtained by the first communication device or a second communication device. For example, the scenario information may indicate a scenario in which the first communication device is located. The scenario information may also indicate a scenario in which the second communication device is located. For example, the scenario indicated by the scenario information may be an outdoor scenario or an indoor scenario, or the scenario indicated by the scenario information is a scenario in which a device (for example, the first communication device or the second communication device) moves at a high speed, a scenario in which a device moves at a medium speed, or a scenario in which a device moves at a low speed. The scenario information may alternatively indicate a scenario of a communication link between the first communication device and the second communication device. For example, the scenario indicated by the scenario information is a scenario in which communication channel coherence time (which is duration in which a communication channel remains unchanged) is less than a threshold or a scenario in which communication channel coherence time is greater than a threshold.

In addition, one type of scenario information and one type of configuration information form a combination, one first AI model may correspond to one or more combinations, and one combination corresponds to one first AI model. The first association relationship is set based on a specific status of the first communication device.

202: The first communication device obtains first information from the second communication device to train at least one first artificial intelligence AI model in the M first AI models, and/or the first communication device determines one first AI model for inference from the M first AI models based on the first association relationship.

For example, the first communication device may determine current scenario information and current configuration information, to search the first association relationship based on the scenario information and the configuration information, to determine one first AI model to perform inference.

In this embodiment of this application, the first communication device may determine the first association relationship based on the status of the first communication device, to customize a scenario classification granularity. Flexibility is high. Then the first communication device may obtain the first information from the second communication device to train at least one first AI model in the M first AI models (the training includes initial training of the model or retraining of the model, and retraining is to update the model), or the first communication device may determine one first AI model for inference from the M first AI models based on the first association relationship.

In a possible implementation, a combination manner of scenario information and configuration information that correspond to one first AI model in the M first AI models is related to the first communication device.

In this embodiment of this application, the first communication device sets, based on the status of the first communication device, a combination manner of scenario information and configuration information that correspond to each first AI model. For example, the first association relationship may be set based on a computing capability, a storage capability, a device preference, or the like of the first communication device. The computing capability includes computing power (the computing power indicates strength of a data processing capability), whether there is a real number processing capability, whether there is a complex number processing capability, whether there is a floating-point number processing capability, whether there is a fixed-point number processing capability, or the like.

In a possible implementation, the first information indicates data collected by the second communication device in a scenario indicated by first scenario information and a configuration indicated by first configuration information, the first scenario information is at least one of the X pieces of scenario information, and the first configuration information is at least one of the Y pieces of configuration information.

In this embodiment of this application, the first information may be data collected by the second communication device in a scenario indicated by scenario information corresponding to at least one first AI model and a configuration indicated by configuration information corresponding to the at least one first AI model. In other words, the first information is training data required for training the first AI model. For example, the training data of the first AI model may be an input and/or an output of a second AI model in the second communication device.

In a possible implementation, the model usage method further includes:
The first communication device sends first indication information to the second communication device, where the first indication information indicates the first scenario information and the first configuration information.

In this embodiment of this application, the second communication device may obtain the first information based on the first indication information, and the first communication device may obtain the first information from the second communication device to perform model training.

In a possible implementation, the model usage method further includes:
The first communication device sends second information to the second communication device, where the second information indicates the first association relationship. Therefore, in this embodiment of this application, the second communication device may learn of the first association relationship based on the second information.

In a possible implementation, the first indication information indicates that one or more of the following are included: the first association relationship; first model indication information used to determine the first AI model; the first scenario information; or the first configuration information.

The first model indication information may be identification information including at least one of a digit, a letter, a special character, and the like. For example, the first AI model is represented by "A", "①", "M1", "MX-1", or the like. For example, when the first indication information is the first association relationship, the second communication device may feed back, to the first communication device, data collected in combinations of all scenario information and configuration information in the first association relationship. For another example, when the first indication information is the first model indication information, the second communication device may feed back, to the first communication device, data collected in a scenario and a configuration that correspond to predefined scenario information and configuration information that correspond to the first model indication information. For another example, when the first indication information is the first scenario information, the second communication device may feed back, to the first communication device, data corresponding to the first scenario information and predefined configuration information (or current configuration information). For another example, when the first indication information is the first configuration information, the second communication device may feed back, to the first communication device, data corresponding to the first configuration information and predefined scenario information (or current scenario information).

For another example, when the second communication device has obtained the first association relationship, and the first indication information is the first model indication information, the second communication device may directly search the first association relationship to obtain a combination of scenario information and configuration information that correspond to the first model indication information, and feed back collected data corresponding to the combination. When the first indication information is the first scenario information, the second communication device may search the first association relationship to obtain data collected in the first scenario information and different configuration information. When the first indication information is the first configuration information, the second communication device may feed back, to the first communication device, collected data corresponding to different scenario information that is corresponding to the first configuration information and that is in the first association relationship.

For another example, when the first indication information is the first scenario information and the first configuration information, the second communication device may collect and feed back data in the scenario corresponding to the first scenario information and the configuration corresponding to the first configuration information.

For another example, when the first indication information is the first model indication information, the first scenario information, and the first configuration information, the second communication device may collect and feed back data in the scenario corresponding to the first scenario information and the configuration corresponding to the first configuration information.

For another example, when the first indication information is the first association relationship, the first model indication information, and the first scenario information, the second communication device may search the first association relationship, to determine configuration information corresponding to the first model indication information and the first scenario information, and then collect and feed back data in a configuration corresponding to the configuration information and the scenario indicated by the first scenario information.

For another example, when the first indication information is the first association relationship, the first model indication information, and the first configuration information, the second communication device may search the first association relationship, to determine scenario information corresponding to the first model indication information and the first configuration information, and then collect and feed back data in a scenario indicated by the scenario information and the configuration indicated by the first configuration information.

For another example, when the first indication information is the first association relationship, the first model indication information, the first scenario information, and the first configuration information, the second communication device may collect and feed back data in the scenario corresponding to the first scenario information and the configuration corresponding to the first configuration information. Alternatively, the second communication device may search the first association relationship, to determine configuration information corresponding to the first model indication information and the first scenario information, and then collect and feed back data in a configuration corresponding to the configuration information and the scenario indicated by the first scenario information. Alternatively, the second communication device may search the first association relationship, to determine scenario information corresponding to the first model indication information and the first configuration information, and then collect and feed back data in a scenario indicated by the scenario information and the configuration indicated by the first configuration information.

The following specifically describes, by using a specific example, that the first communication device obtains the first information from the second communication device to train the at least one first artificial intelligence AI model in the M first AI models. For example, the first communication device is a base station, and the second communication device is a terminal. The following steps are specifically included.

A1: The base station defines the first association relationship.

Specifically, a first association relationship of a device indicates scenarios and configurations that are associated with a same first AI model of the device. The scenario is a scenario that can be observed or identified by the base station or the terminal, for example, whether the scenario is a line-of-sight (line-of-sight, LOS) scenario, or whether the scenario is a low-speed scenario or a high-speed scenario. The configuration is a configuration (such as a reference signal sending period) that can be actively adjusted by the base station. An example of the first association relationship is shown in Table 1 below.

**Table 1 Example of a first association relationship**

| Configuration | Scenario 1 | Scenario 2 | Scenario 3 | Scenario 4 |
|---|---|---|---|---|
| Configuration 1 | ① | ② | ③ | ③ |
| Configuration 2 | ④ | ① | ② | ③ |
| Configuration 3 | ④ | ④ | ① | ② |
| Configuration 4 | ④ | ④ | ④ | ② |

In Table 1, the first association relationship indicates that (scenario 1, configuration 1), (scenario 2, configuration 2), and (scenario 3, configuration 3) are associated with a same first AI model ①. The first association relationship may be defined in the following several possible manners.
(1) Protocol predefinition: All possible configurations (for example, the configurations 1 to 4 in Table 1) and scenarios (for example, the scenarios 1 to 4 in Table 1) are pre-defined, and content in the table is pre-defined, in other words, scenarios and configurations associated with a same first AI model of the device are pre-defined.
(2) Table content customization: All possible configurations (for example, the configurations 1 to 4 in Table 1) and scenarios (for example, the scenarios 1 to 4 in Table 1) are predefined, but content in the table may be customized by the device, in other words, scenarios and configurations associated with a same first AI model of the device are customized by the device.
(3) Table customization: Possible configurations (for example, the configurations 1 to 4 in Table 1) and scenarios (for example, the scenarios 1 to 4 in Table 1) are customized by the device, and content in the table may be customized by the device, in other words, scenarios and configurations associated with a same first AI model of the device are customized by the device.

For example, it is assumed that the first AI model uses channel information of a plurality of consecutive slots as an input to mine a time domain feature of a channel, to improve CSI compression feedback or CSI prediction performance. The time domain feature of the channel is closely associated with a user moving speed and a channel state information-reference signal (Channel State Information-Reference Signal, CSI-RS) period. Therefore, the first association relationship that may be used is shown in Table 2.

**Table 2 Specific example of a first association relationship**

| CSI-RS period/ms | Low speed (0-15 km/h) | Medium speed (15-40 km/h) | Medium-high speed (40-90 km/h) | High speed (>90 km/h) |
|---|---|---|---|---|
| 50 ms | ① | ② | ③ | ③ |
| 20 ms | ④ | ① | ② | ③ |
| 10 ms | ④ | ④ | ① | ② |
| 5 ms | ④ | ④ | ④ | ② |

A2: The base station delivers the first indication information to the terminal.

FIG. 3 is a specific schematic flowchart of a model usage method according to an embodiment of this application. For example, a first AI model is trained or updated. The base station delivers first indication information associated with the model, to indicate the terminal to collect data in a scenario and a configuration indicated by the first indication information and feed back the data to the base station. The base station indicates the terminal to collect data in the following manners.
(1) The first indication information is a first association relationship and a first model indication information, to indicate the terminal to collect and feed back, to the base station, data in a scenario and a configuration that are associated with the first model and that are in the first association relationship.

For example, the first association relationship (for example, Table 2) is sent to the terminal, and an identifier of a to-be-trained or to-be-updated first AI model is sent to the terminal. The terminal may determine, by searching the first association relationship, data to be collected in specific scenarios and configurations and to be fed back to the base station. For example, the base station delivers Table 2 to the terminal. Further, when the base station indicates that the identifier of the first AI model to be trained or to be updated by the terminal is ①, the terminal may learn that the collected data needs to belong to one of the following scenarios and configurations: (CSI-RS period: 50 ms, low speed (0-15 km/h)), (CSI-RS period: 20 ms, medium speed (15-40 km/h)), and (CSI-RS period: 10 ms, medium-high speed (40-90 km/h)).

(2) The first indication information is first scenario information and first configuration information, to indicate the terminal to collect data corresponding to the first scenario information and the first configuration information for the base station.

For example, the base station sends, to the terminal, a plurality of scenarios and configurations associated with the to-be-trained or to-be-updated first AI model, to indicate the terminal to collect and feed back data of the corresponding scenarios and configurations to the base station. For example, the base station delivers a scenario and configuration combination list (CSI-RS period: 50 ms, low speed (0-15 km/h)), (CSI-RS period: 20 ms, medium speed (15-40 km/h)), and (CSI-RS period: 10 ms, medium-high speed (40-90 km/h)). The terminal may learn that the collected data needs to belong to one of the foregoing scenario configurations.

A3: The terminal feeds back first information.

Specifically, the terminal collects, based on the first indication information, data that belongs to the indicated scenario and configuration, that is, the first information, and feeds back the first information to the base station for model training or update. For example, for an AI model used for CSI compression feedback, the first information may include channel information, an output of the channel information through an encoder, and the like. In addition, the first information may further include scenario information and configuration information that correspond to training data.

A4: The base station trains the first AI model based on the feedback data.

Specifically, the base station trains or updates, by using the data fed back by the terminal, the first AI model associated with the indicated scenario and configuration, and may update model performance indicators of the first AI model in different scenarios and configurations. For example, the first AI model is used in a communication system. The model performance indicator may include at least one of channel recovery accuracy, a communication throughput rate, or a block error rate. The model performance indicator may be adjusted based on an application problem of the first AI model. This is not specifically limited.

In the embodiment shown in FIG. 3, the base station indicates, based on the first association relationship, the terminal to feed back data in a plurality of scenarios and configurations for training the first AI model, to implement a compromise between a generalization capability and model complexity of the first AI model. When the device has a high requirement on the model generalization capability, a large quantity of scenarios and configurations in the first association relationship may be associated with a same first AI model, and the terminal collects data in the plurality of scenarios and configurations to train a first AI model, to improve the generalization capability of the first AI model. When the device has a strict limitation on the model complexity, a small quantity of scenarios and configurations in the first association relationship may be associated with a same first AI model, and the terminal collects data in the small quantity of scenarios and configurations to train a first AI model. In this case, a training set includes a small quantity of data features, and an AI model having a small scale or low complexity may be used. In addition, the base station indicates, based on the first association relationship, the terminal to collect data in a plurality of scenarios and configurations to train the first AI model, so that different devices (such as a base station and a device for training a model) can select appropriate scenario classification granularities based on computing capabilities of the devices. This is more flexible in comparison with conventional technologies.

In addition, in the example shown in FIG. 3, when the first communication device is a terminal, and the second communication device is a base station, the terminal can also indicate, based on the first association relationship, the base station to collect data in a plurality of scenarios and configurations to train the first AI model.

In a possible implementation, step 201 includes the following steps.

The first communication device determines the first association relationship based on a second association relationship, where the second association relationship is an association relationship between the X pieces of scenario information, the Y pieces of configuration information, and N second AI models of the second communication device, N is a positive integer, and N is less than or equal to X*Y.

In this embodiment of this application, the first communication device may determine the first association relationship based on the second association relationship, where the X pieces of scenario information and the Y pieces of configuration information may be obtained based on the second association relationship; and then the first communication device may set a correspondence between the M first AI models, the X pieces of scenario information, and the Y pieces of configuration information based on the status of the first communication device.

The following specifically describes, by using a specific example, that the first communication device determines the first association relationship based on the second association relationship, and the first communication device obtains the first information from the second communication device to train the at least one first artificial intelligence AI model in the M first AI models. For example, the first communication device is a terminal, and the second communication device is a base station. When performing inference, the first AI model of the terminal needs to perform joint inference with the second AI model of the base station (for example, an encoder implemented by using AI on a terminal side and a decoder implemented by using AI on a base station side need to perform joint inference). Therefore, the terminal needs to know a training data classification used for training the second AI model of the base station, to ensure that the first AI model trained by the terminal can match the second AI model of the base station. The following steps are specifically included.

B1: The base station defines the second association relationship.

Specifically, a process in which the base station defines the second association relationship is the same as that in the embodiment shown in FIG. 3, and details are not described again.

B2: The base station delivers the second association relationship to the terminal.

FIG. 4 is a specific schematic flowchart of another model usage method according to an embodiment of this application. The base station delivers the second association relationship (for example, Table 3) on the base station side to the terminal. To ensure that the model trained by the terminal can match the model on the base station side, the terminal determines the first association relationship (for example, Table 4) on the terminal side based on the second association relationship. The model on the base station side and the model on the terminal side may perform joint inference. For example, a second AI model on the base station side is a decoder model, and a first AI model on the terminal side is an encoder model.

Specifically, the terminal determines the first association relationship of the model on the terminal side according to Table 3. For example, the second AI model on the base station side is a decoder model, and the first AI model on the terminal side is an encoder model. An application example in which an AI model uses channel information of a plurality of consecutive slots as an input to mine a time domain feature of a channel, to improve CSI compression feedback performance is considered. The time domain feature of the channel is closely associated with a user moving speed and a CSI-RS period. Therefore, the second association relationship is used, as shown in Table 3. Further, the terminal side determines that a scenario and configuration classification in the first association relationship is the same as that in Table 3, and further determines, based on a capability of the terminal side, association relationships between the AI model on the terminal side and different scenarios and configurations, as shown in Table 4.

**Table 3 Example of a second association relationship of a decoder model on a base station side**

| CSI-RS period/ms | Low speed (0-15 km/h) | Medium speed (15-40 km/h) | Medium-high speed (40-90 km/h) | High speed (>90 km/h) |
|---|---|---|---|---|
| 50 ms | ① | ② | ③ | ③ |
| 20 ms | ④ | ① | ② | ③ |
| 10 ms | ④ | ④ | ① | ② |
| 5 ms | ④ | ④ | ④ | ② |

**Table 4 Example of a first association relationship of a model on a terminal side**

| CSI-RS period/ms | Low speed (0-15 km/h) | Medium speed (15-40 km/h) | Medium-high speed (40-90 km/h) | High speed (>90 km/h) |
|---|---|---|---|---|
| 50 ms | 1.1 | 2.1 | 3 | 3 |
| 20 ms | 4.1 | 1.1 | 2.1 | 3 |
| 10 ms | 4.1 | 4.1 | 1.2 | 2.2 |
| 5 ms | 4.2 | 4.2 | 4.2 | 2.2 |

In Table 4, 1.1, 2.1, and the like are model indication information. It can be learned that, in Table 4, a plurality of scenarios and configurations associated with a same AI model in Table 3 are further split. For example, in Table 3, three groups of scenarios and configurations (CSI-RS period: 50 ms, low speed (0-15 km/h)), (CSI-RS period: 20 ms, medium speed (15-40 km/h)), and (CSI-RS period: 10 ms, medium-high speed (40-90 km/h)) are all associated with a same model ① on the base station side. Table 4 indicates that the terminal trains two models (a model 1.1 and a model 1.2 in Table 4) that match the model ①. The model 1.1 is associated with two groups of scenarios and configurations: (CSI-RS period: 50 ms, low speed (0-15 km/h)) and (CSI-RS period: 20 ms, medium speed (15-40 km/h)), and the model 1.2 is associated with one group of scenario and configuration: (CSI-RS period: 10 ms, medium-high speed (40-90 km/h)). An objective of this implementation is that a large-scale AI model can be deployed on the base station side. Therefore, the AI model is capable of learning data features in a plurality of scenarios and configurations through training. When a scale of an AI model that can be deployed on the terminal side is limited, a capability of the AI model to learn data features in a plurality of scenarios and configurations is weak. Therefore, the terminal side may use two models (for example, the model 1.1 and the model 1.2 in Table 4) to match the model ①. Scenario and configuration types associated with the model 1.1 and the model 1.2 are less than those of the model ①. Therefore, generalization capability requirements on the model 1.1 and the model 1.2 can be lowered. In addition, because data features (including (CSI-RS period: 50 ms, low speed (0-15 km/h)) and (CSI-RS period: 20 ms, medium speed (15-40 km/h))) learned during training of the model 1.1 are included during training of the model ①, the model ① can process an output of the model 1.1, in other words, the model ① can match the model 1.1.

B3: The terminal collects the first information, trains the first AI model, and updates the model performance indicator of the first AI model.

The terminal collects, based on the first association relationship of the model on the terminal side and for model training or update, data that belongs to the indicated scenario and configuration, and may update the model performance indicators of the first AI model in different scenarios and configurations based on the data. For example, processes in which the terminal obtains the first information, trains the first AI model, and updates the model performance indicator of the first AI model are the same as those in the embodiment shown in FIG. 3, and details are not described again.

In an implementation, in Table 4, the model 1.1 and the model 1.2 may use different AI model structures (including different quantities of layers and the like), or may use different AI model weight initial values. For another example, the model 1.1 and the model 1.2 may be trained based on a same initial AI model by using data in scenarios and configurations that are respectively associated with the model 1.1 and the model 1.2. The terminal may learn, based on the first association relationship of the model on the base station side, that the model 1.1 and the model 1.2 are similar to a specific degree (the base station side may use a same model to process outputs of the model 1.1 and the model 1.2). Therefore, according to a model transfer (model transfer) idea, the model 1.1 and the model 1.2 may be trained based on a same initial AI model by using data in scenarios and configurations that are respectively associated with the model 1.1 and the model 1.2.

In the embodiment shown in FIG. 4, for a dual-ended model (a model on the terminal side needs to perform joint inference with a model on the base station side), a device (for example, the base station or the terminal) may respectively configure the second association relationship and the first association relationship for the model on the base station side and the model on the terminal side based on a specific situation, to indicate scenarios and configurations to which the model on the terminal side and the model on the base station side are respectively associated. Flexibility is high. The model on the base station side and the model on the terminal side use different association relationships to meet different requirements of the base station side and the terminal side on the AI model generalization capability and the AI model complexity. In addition, the terminal determines the first association relationship on the terminal side when the second association relationship on the base station side is known, so that joint inference of the dual-ended model is not affected.

In a possible implementation, the model usage method further includes:
The first communication device performs inference by using a third AI model.

The third AI model is determined based on second scenario information, or second scenario information and the second information. The third AI model is one of the M first AI models. For example, the first communication device or the second communication device may determine the third AI model.

The second scenario information is one of the X pieces of scenario information. The second information includes one or more of the following: model performance indicators of the M first AI models or second configuration information. The second configuration information is at least one piece of configuration information determined by the first communication device from the Y pieces of configuration information.

For example, when the third AI model is determined based on the second scenario information, when the scenario information is known, the third AI model may be determined based on experience, for example, an AI model having optimal performance in the scenario in history is selected. Alternatively, for example, when the first association relationship is known, a first AI model may be selected from AI models associated with the second scenario information as the third AI model. For example, random selection is performed, or an AI model associated with the second scenario information and current configuration information is selected.

For another example, when the third AI model is determined based on the second scenario information and the model performance indicators of the M first AI models, model performance indicators of first AI models corresponding to the second scenario information and different configuration information may be first determined, and then a first AI model whose model performance indicator meets a preset condition is selected as the third AI model. For example, the preset condition is that a model performance indicator is greater than a preset threshold, or the preset condition is that a model performance indicator is less than a preset threshold. When there are a plurality of model performance indicators, correspondingly, there are also a plurality of preset thresholds.

For another example, the third AI model is determined based on the second scenario information and the second configuration information. For example, when the first association relationship is known, a first AI model may be selected from models associated with the second scenario information and the second configuration information as the third AI model.

For another example, when the third AI model is determined based on the second scenario information, the second configuration information, and the model performance indicators of the M first AI models, a model performance indicator of a first AI model corresponding to the second scenario information and the second configuration information may be first determined, and then whether the model performance indicator meets the preset condition is determined. When the model performance indicator meets the preset condition, the first AI model corresponding to the second scenario information and the second configuration information is used as the third AI model.

In a possible implementation, the model usage method further includes: The second communication device determines the third AI model.

The first communication device receives second indication information sent by the second communication device, where the second indication information indicates the first communication device to perform inference by using the third AI model.

In this embodiment of this application, the second communication device determines the third AI model, and then indicates, by using the second indication information, the first communication device to perform inference by using the third AI model.

In a possible implementation, the second indication information indicates that one or more of the following are included: second model indication information used to determine the third AI model; third configuration information; or third scenario information. The third configuration information and the third scenario information are associated with the third AI model.

Specifically, in the first association relationship, the third AI model is associated with a combination of the third scenario information and the third configuration information. The third scenario information and the second scenario information may indicate a same scenario.

For example, the second indication information may be the third configuration information. In this case, the first communication device determines scenario information by using a sensor of the first communication device, and the first communication device may search the first association relationship for a first AI model, that is, the third AI model, associated with the third configuration information and the scenario information. For another example, when the second indication information is the third scenario information, the first communication device may select, as the third AI model, a first AI model associated with the third scenario information and current configuration information (for example, the configuration information has been indicated in other signaling). For another example, the second indication information is the second model indication information, and the first communication device may determine the third AI model based on the second model indication information.

For another example, the second indication information is the second model indication information, the third configuration information, and the third scenario information. For example, the first communication device may determine the third AI model based on the second model indication information, and the third configuration information and the third scenario information are used to verify accuracy of the second model indication information. The second model indication information may also be used to verify accuracy of an AI model determined based on the third configuration information and the third scenario information.

For another example, the second indication information is the second model indication information and the third configuration information. The third AI model may be determined based on the second model indication information, or the third AI model may be determined based on the third configuration information and scenario information determined by the first communication device by using the sensor of the first communication device. AI models determined in the two manners may be mutually verified.

For another example, the second indication information is the second model indication information and the third scenario information. The third AI model may be determined based on the second model indication information, or the first communication device may select, as the third AI model, a first AI model associated with the third scenario information and current configuration information (for example, the configuration information has been indicated in other signaling).

For another example, when the second indication information is the third configuration information and the third scenario information, the first communication device may determine a corresponding first AI model, that is, the third AI model, based on the third configuration information and the third scenario information. The second communication device may indicate, by indicating scenario information and configuration information, the first communication device to select a matched first AI model for inference, instead of indicating the first model indication information of the first AI model. Therefore, this is still applicable to a case in which the second communication device does not know specific content of the first association relationship of the first communication device.

In a possible implementation, the model usage method further includes:
The first communication device indicates the second scenario information to the second communication device.

In this embodiment of this application, the first communication device may determine the second scenario information, and then indicate the second scenario information to the second communication device, so that the second communication device determines the third AI model based on the second scenario information.

In a possible implementation, the model usage method further includes:
The first communication device indicates the second configuration information to the second communication device.

In this embodiment of this application, the first communication device may determine the second configuration information, and then indicate the second configuration information to the second communication device, so that the second communication device determines the third AI model based on the second scenario information and the second configuration information, or determines the third AI model based on the second scenario information, the second configuration information, and the model performance indicators of the M first AI models.

The following uses two specific examples to specifically describe how the second communication device determines the third AI model for the first communication device. For example, the first communication device is a terminal, and the second communication device is a base station.

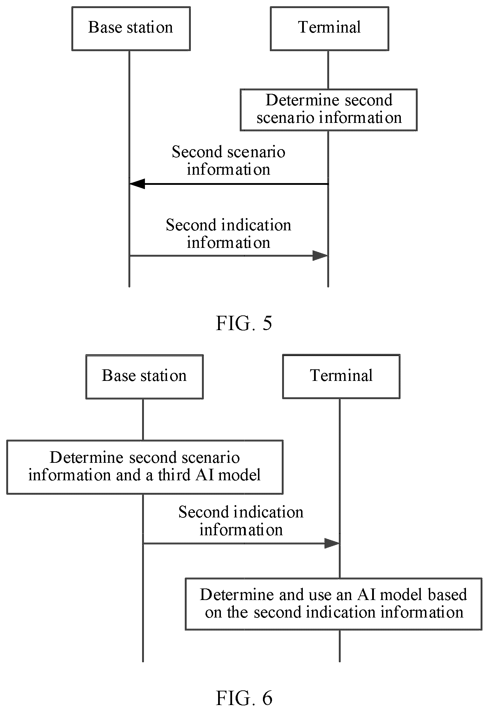

In a first specific example, FIG. 5 is a specific schematic flowchart of another model usage method according to an embodiment of this application. The following steps are specifically included.

C1: The terminal determines the second scenario information, and feeds back the second scenario information to the base station.

Specifically, the terminal performs scenario detection by using a provided device such as a sensor, and determines a current scenario classification, that is, the second scenario information, based on a scenario classification in the first association relationship. For example, for the first association relationship shown in Table 4, the terminal first performs speed detection, and then determines, based on a range to which a speed belongs, that a current scenario is a low-speed scenario, a medium-speed scenario, a medium-high-speed scenario, or a high-speed scenario.

Therefore, in an implementation, the terminal feeds back the scenario classification to the base station, so that the base station can select an appropriate configuration and an associated third AI model based on the scenario. A specific process is shown in step C2.

In addition, the terminal may determine, based on performance of the first AI model in different scenarios and configurations, a model of a specific configuration that is to be used in the current scenario and that has better performance. Therefore, in another implementation, the terminal feeds back, to the base station, the scenario classification and a configuration (that is, the second configuration information) recommended by the terminal.

C2: The base station determines the third AI model, and delivers the second indication information to the terminal.

Specifically, the base station may search, based on the scenario classification fed back by the terminal, the first association relationship for first AI models and performance of the corresponding first AI models in the scenario classification and different configurations, to select an appropriate configuration (that is, the third configuration information), so that performance of a first AI model associated with the scenario information and the third configuration information meets a requirement. The terminal is indicated to use the corresponding first AI model, that is, the third AI model, to perform inference. For example, the third configuration information is selected, so that a first AI model associated with the second scenario information and the third configuration information has the best performance in first AI models associated with the second scenario information.

Further, the base station delivers the second indication information to indicate the terminal to perform inference by using the third AI model, to ensure that a model inference process on the terminal side matches model inference on the base station side (the base station determines an AI model used by the terminal, and the base station may select a model that matches the AI model to perform inference).

For example, the base station delivers the second indication information in the following several manners.
1. The second indication information may be the third configuration information. The base station delivers the third configuration information (a scenario that has identified by the terminal may be known by default, and delivering the second scenario information together with the third configuration information is an optional operation). The terminal searches the first association relationship of the model on the terminal side, may determine a first AI model to be used to perform inference in the current scenario and a configuration indicated by the third configuration information, and may perform model activation and model inference.
2. The second indication information may be second model indication information. The base station delivers an identifier of the AI model on the terminal side. The base station searches the first association relationship that is on the terminal side and that is fed back by the terminal, may determine an AI model that is on the terminal side and that is associated with the current scenario and the configuration indicated by the third configuration information, ad may deliver the model identifier. The terminal may perform activation and inference of the model based on the second indication information.

In the embodiment shown in FIG. 5, the base station selects an appropriate configuration (that is, the third configuration information) based on the second scenario information, the model performance indicator, and the first association relationship, and performs inference by using an AI model associated with the third configuration information and the second scenario information in the second association relationship. Further, the base station indicates the third configuration information (or the second scenario information and the third configuration information), so that the terminal selects, based on the first association relationship, a first AI model associated with the second scenario information and the third configuration information to perform inference. Therefore, even if the terminal side manages the first association relationship of the terminal side and the base station side does not know specific content of the first association relationship on the terminal side, the base station and the terminal may select the model on the base station side and the model on the terminal side that are associated with the second scenario information and the third configuration information, to ensure that the models on the two sides match.

In a second specific example, FIG. 6 is a specific schematic flowchart of another model usage method according to an embodiment of this application. The following steps are specifically included.

D1: The base station determines the second scenario information and the third AI model.

The base station performs scenario detection by using a provided device such as a sensor and a signal processing algorithm, and determines a current scenario classification, that is, the second scenario information, based on a scenario classification in the first association relationship of the terminal. For example, for the first association relationship shown in Table 4, the base station first performs speed detection of the terminal, and then determines, based on a range to which a speed belongs, that a current scenario is a low-speed scenario, a medium-speed scenario, a medium-high-speed scenario, or a high-speed scenario.

The base station may search, based on the scenario classification, the first association relationship for first AI models and performance of the corresponding first AI models in the scenario classification and different configurations, to select an appropriate configuration (for example, a configuration corresponding to the best AI model performance), that is, determine the third configuration information, so that performance of a first AI model associated with the scenario information and the third configuration information meets a requirement. The terminal is indicated to use the corresponding first AI model (that is, the third AI model) to perform inference. The base station needs to know a model performance indicator of the first AI model on the terminal side.

D2: The base station delivers the second indication information, and the terminal determines and uses an AI model based on the second indication information.

The base station delivers the second indication information to indicate the terminal to perform inference by using the third AI model, to ensure that a model inference process on the terminal side matches a model inference process on the base station side. The base station delivers the indication information in the following manners.
1. The second indication information may be the second scenario information and the third configuration information. The base station delivers the second scenario information and the third configuration information. The terminal searches the first association relationship of the model on the terminal side, may determine an AI model to be used for inference in the current scenario and configuration, and may perform model activation and model inference.
2. The second indication information may be second model identifier information. The base station delivers the second model identifier information on the terminal side. The base station searches the first association relationship that is on the terminal side and that is fed back by the terminal, may determine an AI model that is on the terminal side and that is associated with the current scenario and configuration to perform inference, and may deliver an identifier of the model. The terminal may perform activation and inference of the model based on the second indication information.

A technical effect of the embodiment shown in FIG. 6 is similar to that of the embodiment shown in FIG. 5. In addition, in the embodiment shown in FIG. 6, the base station performs scenario detection, so that computing complexity on the terminal side can be reduced.

For a process in which the first communication device determines the third AI model, refer to the embodiment shown in FIG. 6. The process is the same as a process in which the second communication device determines the third AI model. Details are not described herein again.

The following describes an apparatus provided in this application.

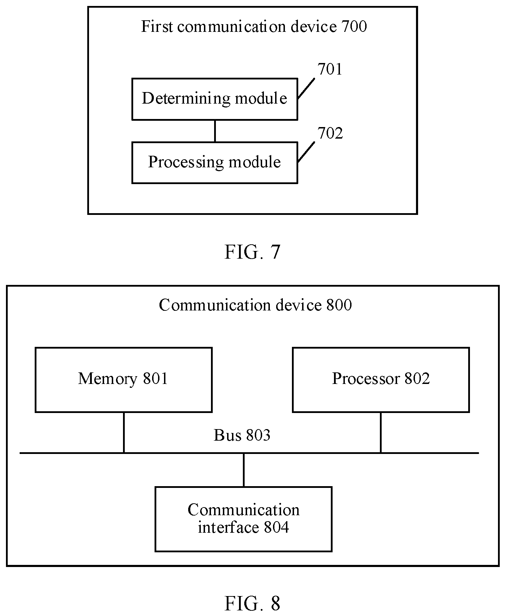

FIG. 7 is a diagram of a structure of a first communication device according to an embodiment of this application.

The first communication device 700 includes a determining module 701 and a processing module 702.

The determining module 701 is configured to determine a first association relationship. The first association relationship is an association relationship between X pieces of scenario information, Y pieces of configuration information, and M first artificial intelligence AI models of the first communication device, X, Y, and M are positive integers, and M is less than or equal to X*Y.

The processing module 702 is configured to: obtain first information from a second communication device to train at least one first AI model in the M first AI models, and/or determine one first AI model for inference from the M first AI models based on the first association relationship.

In a possible implementation, the determining module 701 is specifically configured to:
determine the first association relationship based on a second association relationship, where the second association relationship is an association relationship between the X pieces of scenario information, the Y pieces of configuration information, and N second AI models of the second communication device, N is a positive integer, and N is less than or equal to X*Y.

In a possible implementation, the first communication device 700 further includes:
a sending module, configured to send first indication information to the second communication device, where the first indication information indicates first scenario information and first configuration information.

In a possible implementation, the first communication device 700 further includes:
an inference module, configured to perform inference by using a third AI model. The third AI model is determined based on second scenario information, or second scenario information and the first information. The third AI model is one of the M first AI models.

The second scenario information is one of the X pieces of scenario information. The first information includes one or more of the following: model performance indicators of the M first AI models or second configuration information. The second configuration information is at least one piece of configuration information determined by the first communication device from the Y pieces of configuration information.

In a possible implementation, the first communication device 700 further includes:
a receiving module, configured to receive second indication information sent by the second communication device, where the second indication information indicates the first communication device to perform inference by using the third AI model.

In a possible implementation, the first communication device 700 further includes: an indication module, configured to indicate the second scenario information to the second communication device.

In a possible implementation, the indication module is further configured to indicate the second configuration information to the second communication device.

The first communication device 700 may be configured to implement a function of the first communication device in the foregoing method embodiments. Therefore, beneficial effects of the foregoing method embodiments can also be achieved.

FIG. 8 is a diagram of a structure of a communication device according to an embodiment of this application.

The communication device 800 includes a memory 801, a processor 802, a communication interface 804, and a bus 803. The memory 801, the processor 802, and the communication interface 804 are communicatively connected to each other through the bus 803. There may be one or more memories 801, and there may be one or more processors 802.

For example, the communication device 800 may be a chip or a chip system.

The memory 801 may be a read only memory (Read Only Memory, ROM), a static storage device, a dynamic storage device, or a random access memory (Random Access Memory, RAM). The memory 801 may store a program. When the program stored in the memory 801 is executed by the processor 802, the processor 802 is configured to perform the steps of the model usage method according to any one of the foregoing embodiments.

The processor 802 may be a general-purpose central processing unit (Central Processing Unit, CPU), a microprocessor, an application-specific integrated circuit (Application Specific Integrated Circuit, ASIC), a graphics processing unit (Graphics Processing Unit, GPU), or one or more integrated circuits, and is configured to execute a related program, to implement the model usage method according to any one of the foregoing embodiments.

The processor 802 may be alternatively an integrated circuit chip and has a signal processing capability. In an implementation process, the steps of the model usage method in any embodiment of this application may be completed by using an integrated logic circuit of hardware in the processor 802, or by using instructions in a form of software. The processor 802 may be alternatively a general purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps of the model usage method described with reference to any embodiment of this application may be directly performed and accomplished by using a hardware decoding processor, or may be performed and accomplished by using a combination of hardware and a software module in the decoding processor. A software module may be located in a mature storage medium in the art, such as a random access memory, a flash memory, a read-only memory, a programmable read-only memory, an electrically erasable programmable memory, or a register. The storage medium is located in the memory 801, and the processor 802 reads information in the memory 801 and completes the model usage method according to any one of the foregoing embodiments in combination with hardware of the processor 802.

The communication interface 804 uses a transceiver apparatus, for example, but not limited to, a transceiver, to implement communication between the communication device 800 and another device or a communication network.

The bus 803 may include a path for transmitting information between components (for example, the memory 801, the processor 802, and the communication interface 804) of the communication device 800.

It should be noted that although only the memory, the processor, and the communication interface of the communication device 800 shown in FIG. 8 are illustrated, in a specific implementation process, a person skilled in the art should understand that the communication device 800 further includes other components necessary for normal operation. Moreover, according to a specific requirement, a person skilled in the art should understand that the communication device 800 may further include hardware components for implementing other additional functions. In addition, a person skilled in the art should understand that the communication device 800 may include only components required for implementing embodiments of this application, but not necessarily include all the components shown in FIG. 8.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

This application further provides a chip. The chip includes a processor and a data interface. The processor reads, by using the data interface, instructions stored in a memory, to perform the model usage method according to any one of the foregoing embodiments.

Optionally, in an implementation, the chip may further include the memory. The memory stores the instructions. The processor is configured to execute the instructions stored in the memory. When the instructions are executed, the processor is configured to perform the model usage method according to any one of the foregoing embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model usage method, comprising:
determining, by a first communication device, a first association relationship, wherein the first association relationship is an association relationship between X pieces of scenario information, Y pieces of configuration information, and M first artificial intelligence AI models of the first communication device, X, Y, and M are positive integers, and M is less than or equal to X*Y; and
obtaining, by the first communication device, first information from a second communication device to train at least one first AI model in the M first AI models, and/or determining, by the first communication device, one first AI model for inference from the M first AI models based on the first association relationship.

2. The method according to claim 1, wherein a combination manner of scenario information and configuration information that correspond to one first AI model in the M first AI models is related to the first communication device.

3. The method according to claim 1 or 2, wherein the method further comprises:
sending, by the first communication device, second information to the second communication device, wherein the second information indicates the first association relationship.

4. The method according to any one of claims 1 to 3, wherein determining, by the first communication device, the first association relationship comprises:
determining, by the first communication device, the first association relationship based on a second association relationship, wherein the second association relationship is an association relationship between the X pieces of scenario information, the Y pieces of configuration information, and N second AI models of the second communication device, N is a positive integer, and N is less than or equal to X*Y.

5. The method according to any one of claims 1 to 4, wherein the first information indicates data collected by the second communication device in a scenario indicated by first scenario information and a configuration indicated by first configuration information, the first scenario information is at least one of the X pieces of scenario information, and the first configuration information is at least one of the Y pieces of configuration information.

6. The method according to claim 5, wherein the method further comprises:
sending, by the first communication device, first indication information to the second communication device, wherein the first indication information indicates the first scenario information and the first configuration information.

7. The method according to claim 6, wherein the first indication information indicates that one or more of the following are comprised:
the first association relationship;
first model indication information used to determine the first AI model;
the first scenario information; or
the first configuration information.

8. The method according to any one of claims 1 to 7, wherein the method further comprises:
performing, by the first communication device, inference by using a third AI model, wherein the third AI model is determined based on second scenario information, or the second scenario information and the second information, and the third AI model is one of the M first AI models, wherein
the second scenario information is one of the X pieces of scenario information, the second information comprises one or more of the following: model performance indicators of the M first AI models or second configuration information, and the second configuration information is at least one piece of configuration information determined by the first communication device from the Y pieces of configuration information.

9. The method according to any one of claims 1 to 8, wherein the method further comprises:
receiving, by the first communication device, second indication information sent by the second communication device, wherein the second indication information indicates the first communication device to perform inference by using the third AI model.

10. The method according to claim 9, wherein the second indication information indicates that one or more of the following are comprised:
second model indication information used to determine the third AI model;
third configuration information; or
third scenario information, wherein
the third configuration information/the third scenario information is associated with the third AI model.

11. The method according to claim 9 or 10, wherein the method further comprises:
indicating, by the first communication device, the second scenario information to the second communication device.

12. The method according to any one of claims 8 to 11, wherein the method further comprises:
indicating, by the first communication device, the second configuration information to the second communication device.

13. A first communication device, comprising:
a determining module, configured to determine a first association relationship, wherein the first association relationship is an association relationship between X pieces of scenario information, Y pieces of configuration information, and M first artificial intelligence AI models of the first communication device, X, Y, and M are positive integers, and M is less than or equal to X*Y; and
a processing module, configured to: obtain first information from a second communication device to train at least one first AI model in the M first AI models, and/or determine one first AI model for inference from the M first AI models based on the first association relationship.

14. A communication device, comprising a processor, wherein the processor is coupled to a memory, the memory is configured to store a computer program or instructions, and the processor is configured to execute the computer program or the instructions, to enable the communication device to perform the method according to any one of claims 1 to 12.

15. A computer-readable storage medium, comprising a computer program, wherein when the computer program is run on a computer, the computer is enabled to perform the method according to any one of claims 1 to 12.

16. A computer program product, wherein when the computer program product runs on a computer, the computer is enabled to perform the method according to any one of claims 1 to 12.
